(19) Europäisches Patentamt

European Patent Office

Office européen des brevets

(11) **EP 0 837 356 B1**

(12) **EUROPEAN PATENT SPECIFICATION**

(45) Date of publication and mention
of the grant of the patent:
**03.12.2003 Bulletin 2003/49**

(51) Int Cl.⁷: $G02F\ 1/225$, G02F 1/1333

(21) Application number: **96307542.9**

(22) Date of filing: **17.10.1996**

(54) **Tunable optical filter**

Abstimmbares optisches Filter

Filtre optique accordable

(84) Designated Contracting States:
**BE CH DE DK ES FR GB IE IT LI NL PT SE**

(43) Date of publication of application:
**22.04.1998 Bulletin 1998/17**

(73) Proprietor: **BRITISH TELECOMMUNICATIONS
public limited company
London EC1A 7AJ (GB)**

(72) Inventor: **Kershaw, Stephen Vincent
Ipswich, Suffolk IP1 6PL (GB)**

(56) References cited:
**US-A- 4 802 727**

• **PATENT ABSTRACTS OF JAPAN vol. 012, no.
203 (P-715), 11 June 1988 & JP 63 005327 A
(IDEMITSU KOSAN CO LTD), 11 January 1988,**
• **IEEE PHOTONICS TECHNOLOGY LETTERS,
SEPT. 1996, IEEE, USA, vol. 8, no. 9, ISSN
1041-1135, pages 1190-1192, XP000624872
YUFEI BAO ET AL: "High-speed liquid crystal
fiber Fabry-Perot tunable filter"**

## Description

This invention relates to a tunable optical filter, which has particular but not exclusive application in wavelength division multiplexing (WDM) communication systems.

WDM systems involve a number of channels of different wavelength being transmitted simultaneously in an optical fibre, each channel typically being defined by a laser, or high brightness infra-red light emitting diode (IR LED) source. This technique permits the transmission capability of the optical fibre to be upgraded to the multi-Gbit/s range. Tunable optical filters are used in such systems to select a particular wavelength from a range of input wavelengths, with the ability to alter the wavelength to be selected by applying an electrical signal to the filter.

Tunable optical filters are well known. Reference is directed to J S Patel: "Electro-optic Switch Using a Liquid Crystal Fabry-Perot Filter", Proceedings of the SPIE, Vol. 1665, pp. 244-249 (1992). Present methods of making these involve a Fabry-Perot resonant cavity containing a discrete liquid crystal cell (discrete cell LCFP), in which a thin layer of liquid crystal material is confined between glass plates with broad band reflective coatings. Reference is directed to A. Sneh, K.M. Johnson, J-Y. Liu: "High-Speed Wavelength Tunable Liquid Crystal Filter", IEEE Phot. Tech. Letters, Vol. 7 No. 4, April 1995, pp. 379-381.

Japanese laid-open patent publication number [1988] 63-5327 discloses a Fabry-Perot resonator arrangement in which a liquid crystal material filling the space between two optical fibres is sealed within a cell. The outline disclosure of the sealed cell construction presents clear manufacturing difficulties and does not lend itself to the production of arrays of such devices. In addition, the disclosed resonator has conductive coatings forming mirrors on the optical fibre ends, which therefore disadvantageously fall within the optical path. The need to bring electrodes from the conductive coatings on each fibre end to the outside of the cell further complicates construction.

In high-speed liquid crystal fibre Fabry-Perot tuneable filter, IEEE Photonics Technology Letters, volume 8, number 9, September 1996, pp1190-1192, Bao et al report a liquid-crystal fibre Fabry-Perot tuneable filter which uses an electroclinic liquid-crystal material contained within a channel between a pair of nickel electrodes which are bonded between the end faces of two single mode optical fibres. The channel was approximately 8 microns thick, 22 microns wide and 2.5 millimetre long. Thin alignment layers were formed on the fibre end faces to produce a homeotropic pre-tilt alignment of the liquid crystal molecules and hence a large modulation in the refractive index when an electric field was applied across the channel. The design was said to have four key features: a waveguide segment within a cavity, thus limitation diffraction loss; small beam size, thus minimising transverse modulation voltage; pre-tilted homeotropic liquid crystal alignment, thus maximising index modulation; and lateral electrodes for transverse index modulation, thus preventing addition cavity loss otherwise induced by longitudinal transparent electrodes.

According to a first aspect the invention provides a tuneable optical filter comprising first and second optical fibres between a substrate and a superstrate with a space between the optical fibres, and means to form an optical resonant cavity, the cavity including a material with a selectively variable refractive index to permit tuning of the filter, characterised in that the means to form an optical resonant cavity include a Bragg grating in at least one of the optical fibres.

In a second aspect the invention provides an array of individually tuneable optical filters an array of individually tuneable optical filters, comprising a plurality of optical fibres on each of two opposite sides of the device, each fibre on one side being aligned with one of the fibres on the opposite side by means of grooves formed in a substrate and a superstrate, with a space between the end of each pair of the fibres, and a means to form an optical resonant cavity which includes the space between the ends of the fibres, the means to form an optical resonant cavity including a Bragg grating in at least one of each pair of fibres, each optical resonant cavity including a liquid crystal material and containing an electrode, formed on the substrate or superstrate, to permit individual tuning of each filter.

The tunable optical filler comprises optical fibres. By avoiding the need for a transition from fibre optics to the bulk optics of the discrete cell LCFP, this invention provides several advantages over its discrete cell counterpart. First, dispensing with the discrete cell construction, and therefore elements such as the beam collimating optical components, permits the fabrication of a large number of devices and arrays of devices on a single wafer, which are more compact and so more readily packaged and integrated than their discrete cell counterparts. This provides a route to low cost wavelength tunable filters.

Second, the device according to the invention may avoid the variations in cell thickness and the poor cavity uniformity which limits cavity finesse in low cost discrete cell LCFPs, and so is capable of improved performance for equivalent cost.

A further advantage of the invention is that it facilitates the construction of individually addressable filter arrays on a single substrate layer which enables very compact devices to be fabricated. Preferably, a device according to the invention includes an individually tunable filter array, in which a plurality of grooves is etched in a substrate and a superstrate, with individual electrodes formed on the superstrate or substrate between the grooves, and terminating in the space between the optical fibres located in the grooves, which space is filled with liquid crystal material, which has a selectively variable refractive index for one or more polarisation states of the incident light. A voltage may be applied to each electrode individually to enable independent tuning of each filter in the array.

The formation of an optical resonant cavity is achieved in that at least one of the optical fibres includes a Bragg grating, which enables cavity length to be set by appropriate positioning of the grating along the fibre. The refractive index modulation depth of the grating may also influence the effective cavity length.

V grooves may be formed in the substrate for locating and holding the optical fibres in position, which permit alignment of the fibres. The substrate is preferably formed from silicon, or from another crystal material which permits the etching of suitable V grooves.

Alternatively, essentially rectangular grooves to hold and locate the optical fibres are formed in the substrate, preferably a polymer such as a methacrylate, by a process which permits accurate fabrication of such grooves, an example of which is known as the LIGA process. Reference is directed to "Integrated circuit manufacturing techniques applied to microfabrication", M. Madou, H. Lynn Kein, Chapter 3 in "Handbook of Chemical and Biological Sensors", Editors R. F. Taylor and J. S. Schultz, IOP Publishing, Bristol and Philadelphia, 1996.

As an alternative to the use of standard optical fibres, tapered core fibres may be used in which the core diameter increases towards the output. This may reduce cavity losses, particularly where the fibre-to-fibre separation is large, for example, in excess of 20µm.

So that the invention may be more fully understood, embodiments thereof will now be described by way of example with reference to the accompanying drawings, in which:

Figure 1 is a perspective schematic view of a device in accordance with the first embodiment of the invention, showing the main external features;
Figure 2 is a schematic plan view of the substrate of the device shown in Figure 1 illustrating the layout of optical fibres;
Figure 3 is a schematic plan view of the superstrate of the device shown in Figure 1 illustrating the layout of independent electrodes;
Figure 4 is a schematic cross-sectional view of the device in Figure 1 taken across the fibres, as shown by the line AA' in Figures 2 and 3;
Figure 5 is a schematic view of a fibre held between two grooves, indicating the cell height and groove angle, width and depth;
Figure 6 is a schematic sectional view along a groove, showing the shape of the groove end wall in the substrate only, prior to selective etching;
Figure 7 is a schematic sectional view of the device in Figure 1 taken along the fibres, as shown by the line BB' in Figures 2 and 3;
Figure 8 is a schematic sectional view of a device in accordance with a second embodiment of the invention;
Figure 9 is a schematic sectional view of a device in accordance with a third embodiment of the invention;
Figure 10 is a schematic view of a tapered fibre;
Figure 11 is a graph showing the typical wavelength response with applied voltage of a device with Bragg grating reflectors;
Figure 12 is a schematic view of the fourth embodiment of the invention in which the cavity comprises three sections of liquid crystal material at different orientations; and
Figure 13 is a schematic diagram of the polarisation states for the fourth embodiment.

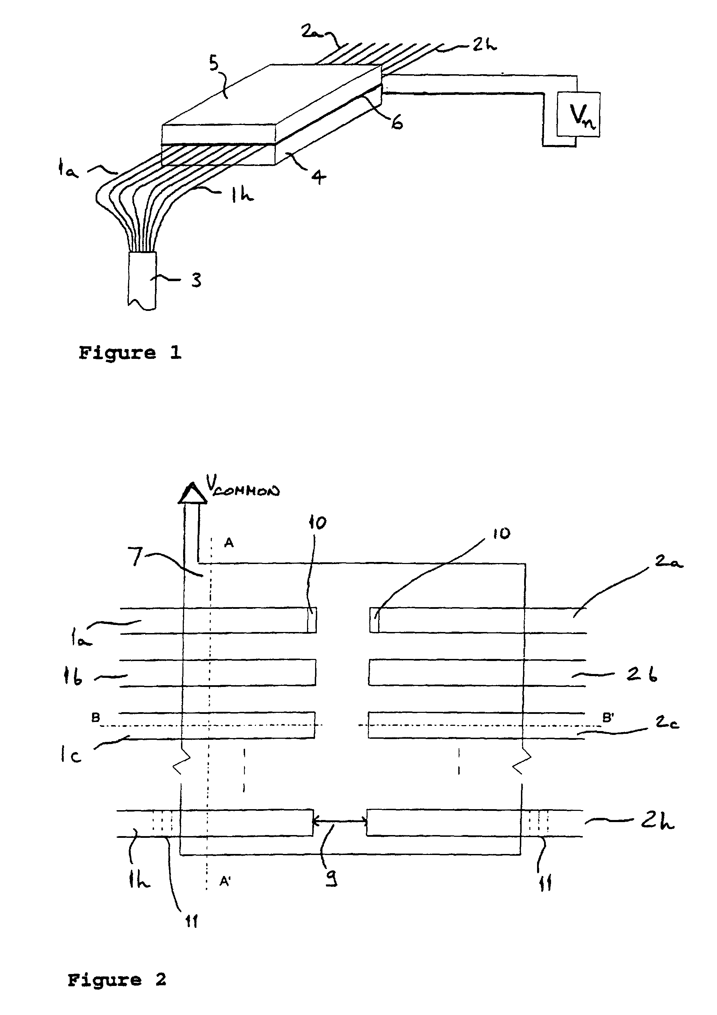

Referring to the perspective view in Figure 1, the device consists of an array of eight optical fibres 1a - h from an optical ribbon cable 3 held in an assembly comprising a silicon substrate 4 and superstrate 5, with a further eight optical fibres 2a - h leading out of the assembly. The optical fibres are standard single-mode fibres used, for example, in the 900, 1300 and 1550 nm telecommunications windows, with a typical external cladding diameter of 125µm and a typical core diameter of 8µm, from which the primary coating, typically a urethane or silicone polymer layer, has been stripped. The assembly is typically 1 cm long and 2 mm wide and is sealed by a standard adhesive such as a UV curable epoxy glue 6 around the edge of the assembly. LUXTRAK LCR 050+UV adhesive manufactured by Ablestik Corporation, USA, has been found suitable. This is cured by application of UV radiation from a standard UV gun/lamp.

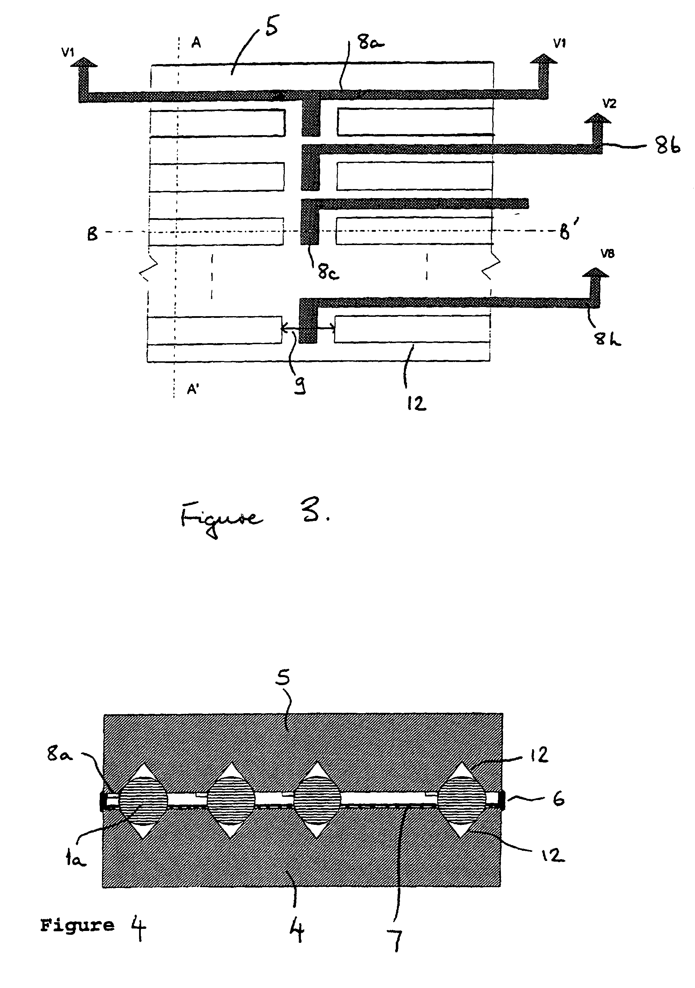

Referring to Figure 2, an electrically conductive metallisation layer 7 is formed on the inner surface of the substrate as shown in Figures 2 and 4, by a standard deposition technique such as vapour deposition, typically of a titanium layer to assist adhesion, followed by a gold layer. The substrate 4 comprises undoped, low conductivity silicon, to prevent cross-talk between individual filters on the same substrate. The fibres are located and aligned by means of V grooves which will be described in detail below. Each incoming fibre 1a - h is aligned with a corresponding outgoing fibre 2a - h with a space 9 of typically between 10µm and 50µm separating the cleaved ends of the fibres.

In an alternative embodiment, particularly suitable for single filter devices or where cross-talk is otherwise not relevant, the metallisation layer may be formed on the outer surface of the substrate. In that case, the silicon substrate is lightly doped to make it conductive, to a resistivity of a few ohm.cm.

A comparative example of the optical resonant cavity includes the application of a standard multi-layer dielectric semi-reflective coating 10 on the cleaved ends of the optical fibres, typically consisting of five alternate thin film layers of titania and silica deposited directly on-

to the fibre facet, typically using a deposition technique generically known as ion assisted deposition, using ions such as oxygen ions. The thickness of each layer is designed to be precisely equal to a quarter wave optical thickness at the wavelength of interest, for example, 1550nm. Reference is directed to "Thin Film Optical Filters", H.A. MacLeod, Adam Hilger (1986) for a general description of the design and manufacture of mirror coatings.

An embodiment of the cavity includes a Bragg grating 11 in the optical fibre. The length of the cavity is determined by the position of the grating, which is typically located 300μm from the end of the fibre. Reference is directed to R. Kashyap: "Photosensitive Optical Fibres: Devices and Applications", Optical Fiber Technology 1, 17 - 34 (1994), for a description of the formation of a refractive index grating.

Referring to Figure 3, electrodes 8a - h are formed by vapour deposition of titanium and gold on the superstrate between the grooves in which the fibres will be located, terminating in the unetched portion of the superstrate which forms the space 9 between the ends of the fibres. The electrodes are typically 0.5cm long and 100μm wide, but may be brought through the entire structure to enable tapping from each side of the device, both to increase redundancy and to enable the electrode resistance to be halved. This is shown for electrode 8a in Figure 3. Each of electrodes 8a - h may be connected to an independent voltage source, $V_n$, where n = 1 to 8.

Referring to Figure 4, the optical fibres are located by means of V grooves 12 etched in the surface of the substrate 4 and superstrate 5. When the substrate and superstrate are bonded together, the grooves are aligned to form a means of holding each optical fibre in position. The V grooves are etched with a pitch of 250μm, and the etching process takes advantage of the crystal planes of the silicon. For example, etching the (110) plane of a silicon wafer will form grooves with surfaces lying in the (111) plane.

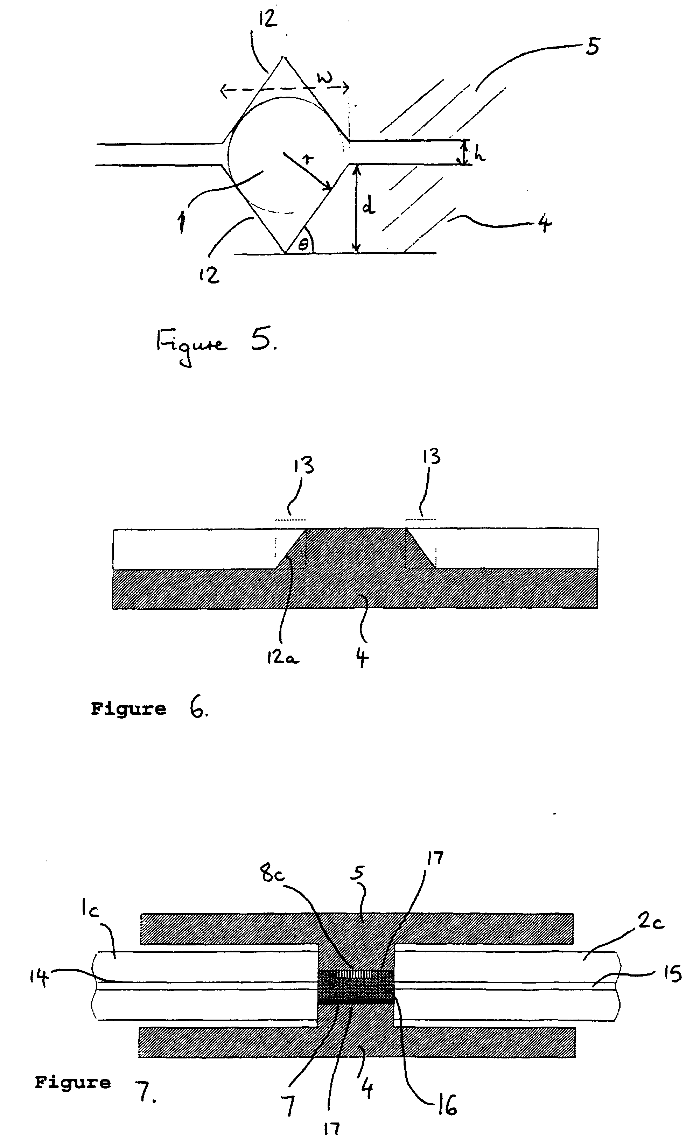

Referring to Figure 5, for a fixed fibre radius r and groove angle θ, the groove depth d is a function of the desired cell height h, defined as the separation between the substrate 4 and the superstrate 5:

$$d = \frac{r}{\sin (90-\theta)} - \frac{h}{2}$$

The limits on the cell height h are determined by the balance between ensuring that the beam of light in the space 9 between the fibres does not graze the silicon substrate or superstrate, by making the cell sufficiently thick, and producing a cell that is sufficiently fast for a particular application, which requires the cell to be thin. A further factor is the ease with which the liquid crystal material may be confined within the cell. Typically, the cell height h is between 10μm and 40μm.

To obtain a groove depth d, a final groove width of w is required (taking account of undercut), where:

$$\frac{w}{2} = \frac{d}{\tan\theta} = \frac{1}{\tan\theta} \left( \frac{r}{\sin (90-\theta)} - \frac{h}{2} \right)$$

For silicon V grooves, θ = 54.74°

Assuming a typical desired cell height h = 40μm, and fibre diameter of 125μm (r = 62.5μm), then the groove depth d is 88.3μm and the groove width after etching is 126.8μm.

Each groove is etched along the whole length of the substrate and superstrate except for a length of 10-50μm in the central region by which the fibres will be separated. The grooves may be formed by standard photolithography, aligning the mask to a set of crystal alignment marks etched beforehand onto wafers. As an alternative, they may be formed by a standard electron beam lithography process: reference is directed to our PCT Publication Number WO 92/06394 entitled "Self-aligned V grooves and Waveguides" for examples of such a process.

One difficulty associated with the etching of the V grooves is that this creates an angled end wall 12a shown in Figure 6, as well as an angled side wall, which may prevent accurate alignment of the optical fibres. This difficulty may be overcome by selective etching of the end of the groove using a standard lithography technique. Selective etching of the dotted areas 13 is desirable to create a square profile. The end wall 12a may also be removed by means of a shallow saw cut across the ends of the grooves in the substrate and superstrate. Individually addressable electrodes can still be provided by means of fine bond wires across the resulting gaps.

Referring to Figure 7, the optical fibres are located in each groove so that there is a clear path for optical radiation to pass through core 14 of fibre 1c, typically 8μm in diameter, to the core 15 of the fibre 2c aligned with it.

The volume between the optical fibres, bounded by the superstrate and substrate, is filled with nematic liquid crystal material 16, which has a selectively variable refractive index. To enable the liquid crystal material to respond to an applied electric field, the liquid crystal molecules must initially be aligned in relation to the substrate 4 and superstrate 5. Therefore, as a final layer, the substrate and superstrate are coated with an alignment layer 17 to a depth of typically 50 nm by the standard technique of vapour deposition of non-stoichiometric silicon oxide, $SiO_x$, at an oblique angle of incidence. Reference is directed to C. Maze, "Determination of Nematic Liquid Crystal Elastic and Dielectric Properties from the Shape of a Capacitance - Voltage Curve", Mol. Cryst. Liq. Cryst., 46, 273 (1978). Alignment of liquid crystals can also be achieved by the use of surface gratings, a technique which is well known. Reference is directed to D. C. Shaver: "Alignment of Liquid Crystals by Surface Gratings", Technical Report 538, Lincoln Laboratory, MIT, 31 October 1979.

Prior to filling with liquid crystal material 16, the device is assembled and sealed with standard UV curing epoxy glue 6, as described above. A gap is left at one corner to allow access to the volume inside. The volume is then filled by dipping the device into a boat filled with the liquid crystal material in a vacuum. The liquid crystals will be drawn in by capillary action and the inlet hole may be sealed by further application of epoxy glue. For a range of substrate/superstrate separations between 10 and 40μm, the liquid crystal material 16 tends to remain within the assembly even without the application of glue, as a result of capillary action. Many types of nematic liquid crystal materials and mixtures are suitable for this application. However, a nematic liquid crystal material known as E7 manufactured by E. Merck, Darmstadt, Germany, has been found particularly suitable as it is a simple, inexpensive and easily obtained material.

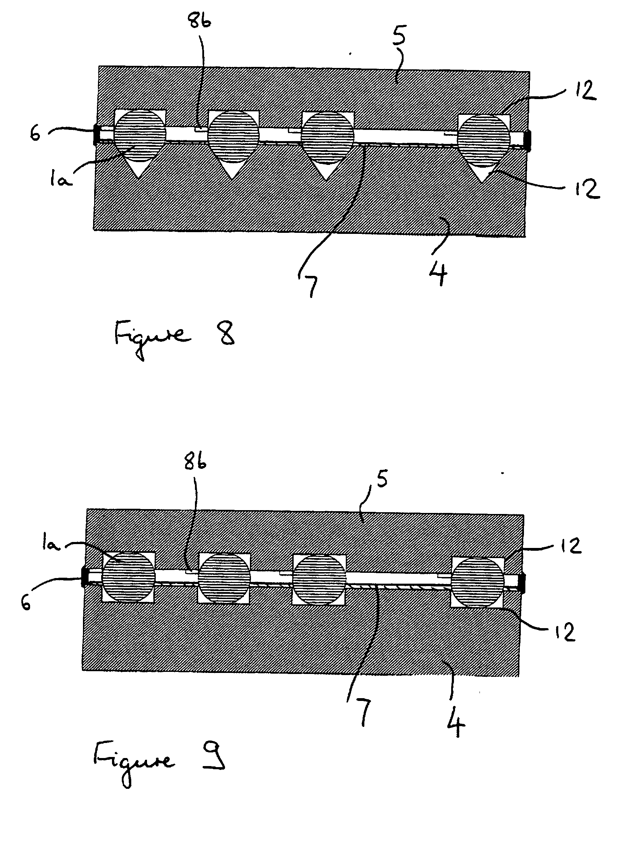

Referring to Figure 8, in a second embodiment of the invention, the superstrate 5 is formed from a photosensitive glass, such as Hoya PEG3, manufactured by Hoya Corporation, Tokyo, Japan. The glass is exposed to ultraviolet rays through a mask patterned with the groove arrangement, leaving a space between the grooves of 10-50μm in the central region, as described in the first embodiment. The exposed part of the glass is crystallised by heat treatment, enabling the crystallised part to be dissolved in hydrofluoric acid to produce the grooves. Exposure of the unexposed part to ultraviolet radiation followed by crystallisation by heat treatment produces a stable non-light sensitive superstrate.

The function of the superstrate is primarily to maintain the optical fibres in position within the V grooves on the substrate and to confine the liquid crystal material. The groove depth is controlled to produce the required cell height, while the groove width allows a few micrometres clearance for the corresponding width of the fibre. Assuming that the V groove depth in the substrate is the same as in the first embodiment, a superstrate groove depth of 42.5μm gives a cell height h of 40μm, with a groove width of typically 125μm. Gold electrodes are deposited on the superstrate as described for the first embodiment, except that an external electrode cannot be applied in this case. The substrate, superstrate and optical fibres are then assembled and sealed using a standard UV curing epoxy glue 6, as in the first embodiment.

Referring to Figure 9, in a third embodiment of the invention, the superstrate 5 is fabricated as for the second embodiment except that the groove depth is 50μm, with a width of 125μm. The substrate 4 is also fabricated with rectangular grooves with a width of 125μm and a depth of 50μm. This gives an overall cell height of 25μm for a standard fibre. Precise location of the optical fibres is preferred, for which highly accurate lithographic fabrication methods, such as the LIGA process, are most suitable. The LIGA process, developed at the research centre Forschungszentrum Karlsruhe GmbH (FZK, formerly KfK) in Karlsruhe, Germany, involves the use of an X-ray synchrotron to produce moulds for making micro-miniature structures to tolerances of less than 1μm, ensuring minimal coupling losses between fibres due to offset of the fibre cores.

A titanium coated ceramic substrate is coated with a thick layer of photoresist, typically PMMA, up to a maximum depth of 1-2 mm. This is then exposed through a mask to high intensity X-rays from a synchrotron. As the X-rays have a characteristic wavelength of only 0.2nm, diffraction effects are minimised and the resulting resist structure has substantially vertical walls. The resist is developed by standard techniques to open windows through to the substrate, which is electroplated with nickel to the required depth. After stripping all of the remaining resist, a metal microstructure remains which may be used directly or replicated to make moulds, to be applied to plastics such as methacrylates to form a substrate 4 with the appropriate rectangular groove pattern. The process is described in detail by M. McCormick, E. Chowanietz and A. Lees; "Microengineering design and manufacture using the LIGA process", IEE Engineering Science and Education Journal, December 1994, pp. 255 - 262.

A standard evaporation technique is used to apply a common electrode 7 to the inside surface of the substrate 4, with a patterned electrode on the superstrate being formed by a standard lithographic process or by evaporation through a metal foil shadow mask.

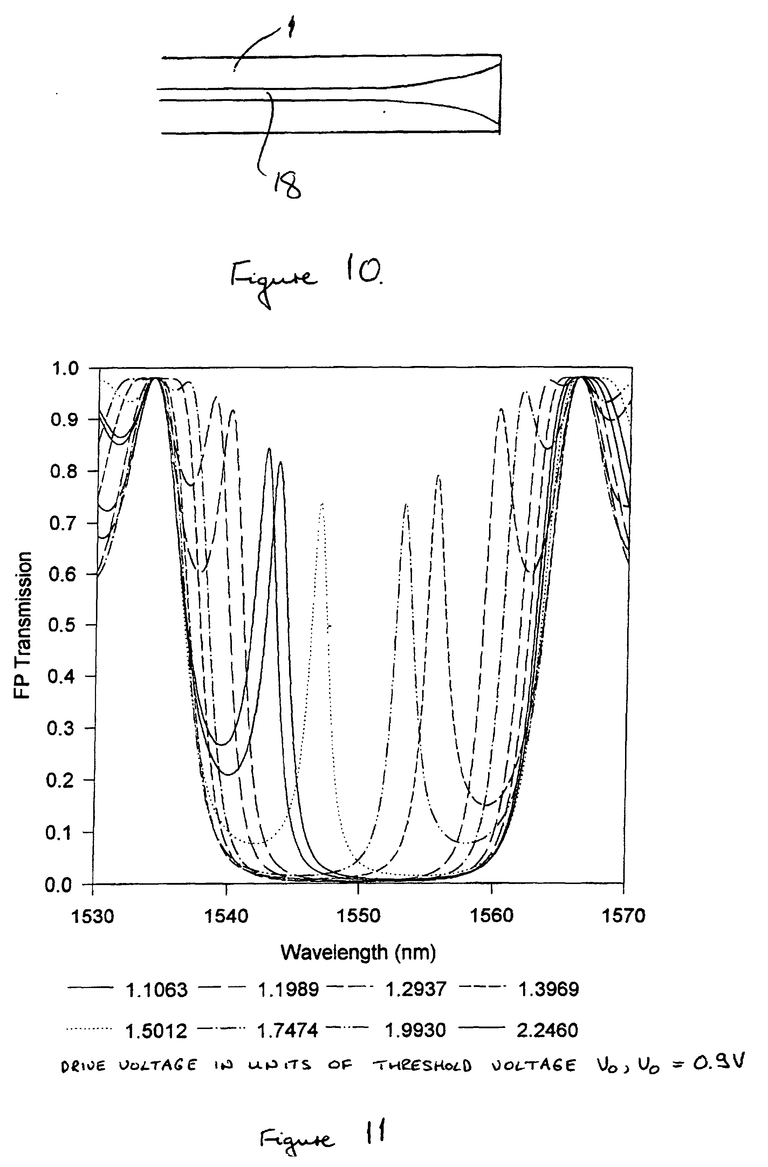

The use of a standard fibre is not necessary in any of the previous embodiments. Fibres with smaller external diameters, but the same core diameter, may be used to reduce the required groove depths and may simplify etching and processing requirements. Referring to Figure 10, fibres 1 are used in which the core 18 widens towards the output. Suitable fibres are made to order by Sumisen Corporation of Japan or according to the techniques described in WO9726571. Increasing the output mode diameter from 8μm to, for example, 25μm, reduces the beam divergence in percentage terms for a given fibre-to-fibre spacing. The result is improved fibre-to-fibre coupling and a more parallel beam in the cavity and so higher cavity finesse. As for the first embodiment, the fibres have Bragg gratings applied, for example by hydrogen doping and photobleaching. In this case, a grating with a uniform physical spatial period is chirped, in that the effective pitch of the grating becomes shorter towards the end of the fibre, due to a change in effective refractive index along the taper of the fibre core. This chirp is useful for increasing the width of the reflection profile of the fibre grating.

The operation of the device will now be described. When optical radiation of a particular polarization is directed into an optical fibre at one end of the device, the device in accordance with the invention operates as a resonant cavity. The optical radiation will only be transmitted through the liquid crystal filled cavity and out through the aligned optical fibre when the resonant condition is achieved. Resonance occurs at a particular wavelength, dependent on the refractive index of the liquid crystal. The resonant condition can be approximately characterised as follows:

$$n\lambda_r = 2\mu d$$

where

$\lambda_r$ is the resonant wavelength
$\mu$ is the refractive index of the cavity material at the resonant wavelength
d is the length of the cavity
n is a positive integer

The refractive index of the liquid crystal material may be varied by applying an A.C. voltage between the relevant electrode on the superstrate, for example, 8a, and the common electrode 7 on the substrate. Typically, a low AC voltage greater than 0.9 volts (the typical threshold RMS voltage) and less than 5 volts, at a typical frequency of 1kHz, is applied. A 1kHz drive signal above the threshold RMS voltage $V_o$ will induce a distortion known as the "Freedericksz distortion" in an initially planar aligned slab of the material. Removal of the drive signal will allow the system to relax back to the initial uniaxial state, with a relaxation time depending on the material's viscosity and elastic constant coefficients and the slab thickness. The device therefore operates as an optical filter which provides a refractive index change $\Delta n$ of typically 0.2 for a component of the input polarisation, tunable over a wavelength range of typically 200 nm where broad band reflectors are used.

A typical response is shown in Figure 11 where narrow band fibre grating reflectors, corresponding to the gratings 11 in Figure 2, form a cavity which is filled with a liquid crystal material. The tuning range in this case is limited by the bandwidth of the grating reflectors (around +/-10nm on the centre wavelength of 1550nm). Multilayer dielectric coatings can have much broader profiles and tuning can cover much wider ranges.

As a further variation, the nematic liquid crystal material is replaced by a dual frequency liquid crystal mixture, such as ZLI - 2461 manufactured by E. Merck, Darmstadt, Germany. With a 1kHz drive signal, the material behaves in a similar way to a simple nematic liquid crystal material. However, faster "turn-off" times can be achieved by driving the material at a higher frequency, typically greater than 10kHz, at which the dielectric anisotropy changes sign to negative, thus reversing the field induced torque on the liquid crystal molecules. The turn-off time now includes terms dependant on the high frequency RMS voltage and is generally somewhat smaller than the comparable value for simple field-free relaxation.

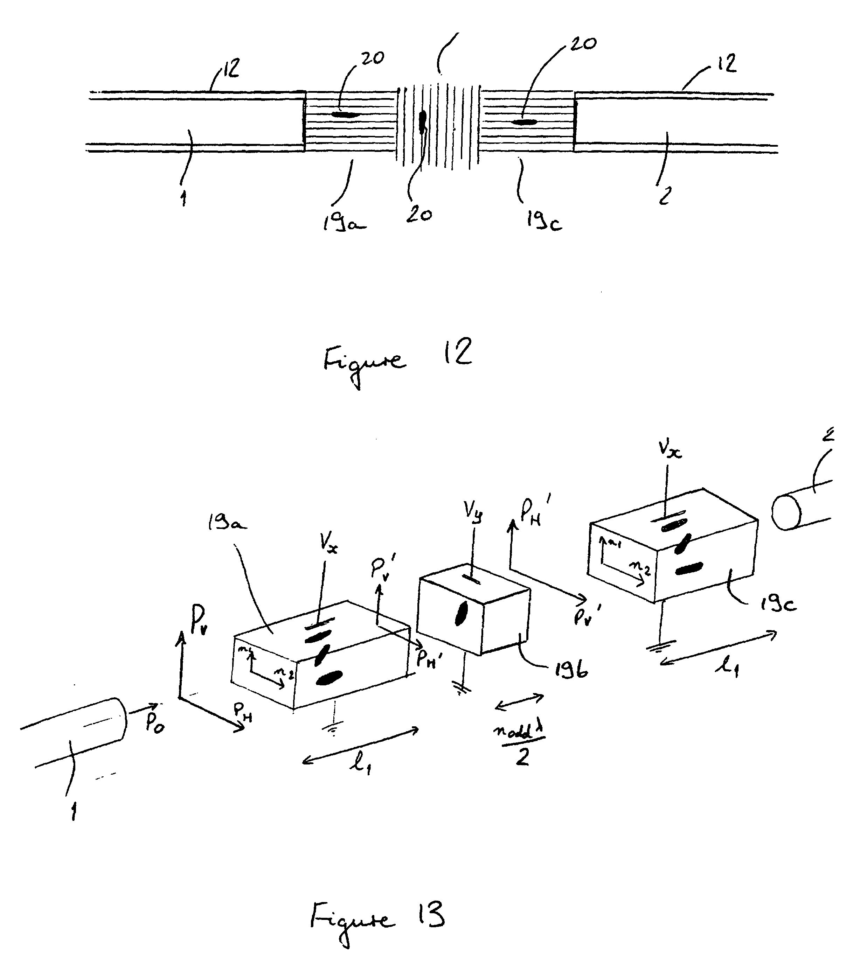

Referring to Figure 12, in a fourth embodiment of the device, an alignment grating 19 is written onto the substrate and superstrate in three sections, 19a, b and c, where the middle section 19b of the grating is perpendicular to the grating sections at either side. The grating is located in the space between fibres 1, 2 held in grooves 12. When the device is filled with liquid crystal material, the liquid crystal molecules 20 in the middle section 19b are aligned essentially perpendicular to the molecules on either side. The electrodes (not shown) are segmented to individually address each of these differently oriented regions to permit the development of polarisation insensitive tuning devices and polarisation controllers.

The alignment grating is formed by etching a surface relief grating 19 into the silicon. Typically, an etch depth of 20-50nm is sufficient. The pitch of the grating is chosen as a compromise between ease of fabrication, for example standard photolithography requires features in excess of 1μm, and having reasonably uniform alignment and a large number of grating periods across each alignment section, typically 5 to 10 periods, thus fixing the maximum acceptable grating pitch. The grating permits variation of the liquid crystal alignment direction within the slab of liquid crystal material.

The width of the central section 19b is designed so that at about the wavelength of operation, this section is a half wave plate, with $d = n\lambda/2$, where n is an odd integer greater than 1, to provide a sufficiently large width for ease of fabrication. Since the width d remains constant over the entire tuning range, d is chosen to achieve a best match at the central wavelength. For a central wavelength of 1550nm, assuming n = 5, d = 3.9μm. The net effect is that for a reasonably high finesse cavity, the polarisation will be scrambled and the polarisation sensitivity minimised at the expense of a reduced tuning range. However, liquid crystal alignment defects at the fibre interfaces and at the transitions from one segment to another cause some degradation of the cavity finesse.

The principle of operation of the fourth embodiment is described by reference to Figure 13. An input polarisation $P_o$ of light emerging from the fibre 1 can be resolved into vertical and horizontal components $P_V$ and $P_H$. On passing through the first segment 19a of the cavity, $P_V$ encounters a refractive index $n_1$ and $P_H$ encounters a refractive index $n_2$. At the exit of this segment, the resolved field vectors will be $P_V'$ and $P_H'$. These can be interchanged by passing through a second segment 19b corresponding to a half wave plate with the fast axis (a property related to the orientation of the liquid crystal molecules) at 45° to the vertical and horizontal directions. For the passage through the final segment 19c of the cell, $P_H'$ now encounters index $n_1$ and $P_V'$ now encounters index $n_2$, if the first and final segments are identical and identically driven. Each polarisation component will encounter a cavity optical length $l_1(n_1 + n_2)$ compared with $2 l_1 n_1$ and $2 l_1 n_2$ if the half wave section were absent. It is this symmetry that makes the device polarisation insensitive.

The polarisation exchange will occur on each pass through the cell. For a finesse, F, this can be envisaged as happening an average F times. If d is not an exact half-wave plate distance for the etalon wavelength then each time a linearly polarised component passes through the central segment it will be rotated and made slightly elliptical. A large number of passes will cause significant elliptical polarisation. There is some scope for adjusting the properties of the half wave plate by varying the voltage $V_y$.

**Claims**

1. A tuneable optical filter comprising first and second optical fibres (1, 2) between a substrate (4) and a superstrate (5) with a space (9) between the ends of the optical fibres, the fibres being axially aligned, and means to form an optical resonant cavity, the cavity including the space (9) between the ends of the optical fibres and a material with a selectively variable refractive index (16) to permit tuning of the filter, **characterised in that** the means to form an optical resonant cavity include a Bragg grating (11) in at least one of the optical fibres.

2. A device according to claim 1, wherein the means to form an optical resonant cavity include a semi-reflective coating (10) on the end of the other one of the optical fibres.

3. A device according to claim 1 or claim 2, wherein the material with a selectively variable refractive index is a liquid crystal material (16), the device including alignment means (17) to orientate the liquid crystal material.

4. A device according to claim 3, wherein the alignment means (17) are arranged such that the orientation of the liquid crystal material (16) varies along the length of the cavity between the first and second optical fibres.

5. A device according to claim 3 or 4, wherein the alignment means comprise an alignment layer (17) formed on the substrate (4) and superstrate (5).

6. A device according to claim 3 or 4, wherein the alignment means comprise a surface grating (17) formed on the substrate (4) and superstrate (5).

7. A device according to any one of the preceding claims, wherein the optical fibres are held in v-grooves (12) formed in the surface of the substrate and superstrate.

8. A device according to any one of the preceding claims, including means for applying a voltage ($V_n$, $V_x$, $V_y$) to vary the refractive index of the cavity material, wherein the means for applying a voltage comprises at least one electrode (7) formed on an inside surface of the substrate (4) or superstrate (5).

9. A device according to any one of the preceding claims, wherein the substrate (4) is formed of silicon.

10. A device according to any one of the preceding claims, wherein the first and second optical fibres are tapered core fibres, the core diameter increasing towards the space between the fibres.

11. An array of individually tuneable optical filters, comprising a plurality of optical fibres (1a-h, 2a-h) on each of two opposite sides of the device, each fibre on one side being aligned with one of the fibres on the opposite side by means of grooves (12) formed in a substrate (4) and a superstrate, with a space (9) between the end of each pair of the fibres, and a means to form an optical resonant cavity which includes the space (9) between the ends of the fibres, the means to form an optical resonant cavity including a Bragg grating (11) in at least one of each pair of fibres, each optical resonant cavity including a liquid crystal material (16) and containing an electrode (8a-h), formed on the substrate or superstrate, to permit individual tuning of each filter.

**Patentansprüche**

1. Abstimmbares optisches Filter, das erste und zweite optische Fasern (1, 2) zwischen einem Substrat (4) und einem Superstrat (5) aufweist, mit einem Zwischenraum (9) zwischen den Enden der optischen Fasern, wobei die Fasern axial ausgerichtet sind, und Mitteln, die einen optischen Resonanzhohlraum bilden, wobei der Hohlraum den Zwischenraum (9) zwischen den Enden der optischen Fasern und ein Material (16) mit einem selektiv variablen Brechungsindex umfasst, um das Filter abstimmen zu können, **dadurch gekennzeichnet, dass** die Mittel, die einen optischen Resonanzhohlraum bilden, ein Bragg-Gitter (11) in zumindest einer der optischen Fasern umfassen.

2. Vorrichtung gemäß Anspruch 1, wobei die Mittel, die einen optischen Resonanzhohlraum bilden, eine halbdurchlässige Schicht (10) auf dem Ende der anderen optischen Faser umfassen.

3. Vorrichtung gemäß Anspruch 1 oder Anspruch 2, wobei das Material mit einem selektiv variablen Brechungsindex ein Flüssigkristallmaterial (16) ist, und wobei die Vorrichtung Ausrichtungsmittel (17) umfasst, um das Flüssigkristallmaterial auszurichten.

**4.** Vorrichtung gemäß Anspruch 3, wobei die Ausrichtungsmittel (17) derart angeordnet sind, dass die Ausrichtung des Flüssigkristallmaterials (16) entlang der Länge des Hohlraums zwischen den ersten und zweiten optischen Fasern variiert.

**5.** Vorrichtung gemäß Anspruch 3 oder 4, wobei die Ausrichtungsmittel eine auf dem Substrat (4) und dem Superstrat (5) ausgebildete Ausrichtungsschicht ( 17) aufweisen.

**6.** Vorrichtung gemäß Anspruch 3 oder 4, wobei die Ausrichtungsmittel ein auf dem Substrat (4) und dem Superstrat (5) ausgebildetes Oberflächengitter (17) aufweisen.

**7.** Vorrichtung gemäß einem der vorhergehenden Ansprüche, wobei die optischen Fasern in v-förmigen Vertiefungen (12) gehalten werden, die auf der Oberfläche des Substrats und des Superstrats ausgebildet sind.

**8.** Vorrichtung gemäß einem der vorhergehenden Ansprüche, welche Mittel zum Anlegen einer Spannung ($V_n$, $V_x$, $V_y$) zum Variieren des Brechungsindexes des Hohlraummaterials umfasst, wobei das Mittel zum Anlegen einer Spannung zumindest eine Elektrode (7) aufweist, die auf einer inneren Fläche des Substrats (4) und des Superstrats (5) ausgebildet ist.

**9.** Vorrichtung gemäß einem der vorhergehenden Ansprüche, wobei das Substrat (4) aus Silizium besteht.

**10.** Vorrichtung gemäß einem der vorhergehenden Ansprüche, wobei die ersten und zweiten optischen Fasern konische Kernfasern sind, wobei der Kerndurchmesser gegen den Zwischenraum zwischen den Fasern hin zunimmt.

**11.** Anordnung individuell abstimmbarer optischer Filter mit einer Vielzahl von optischen Fasern (1a-h, 2a-h) an jeder von zwei gegenüberliegenden Seiten der Vorrichtung, wobei jede Faser auf einer Seite mit einer der Fasern auf der anderen Seite über in einem Substrat (4) und einem Superstrat (5) gebildete Vertiefungen (12) ausgerichtet ist und einen Zwischenraum (9) zwischen dem Ende jedes Faserpaares aufweist, und einem Mittel, das einen optischen Resonanzhohlraum bildet, welcher den Zwischenraum (9) zwischen den Enden der Fasern umfasst, wobei das Mittel, das einen optischen Resonanzhohlraum bildet, ein Bragg-Gitter (11) in zumindest einer Faser jedes Faserpaares umfasst, und wobei jeder optische Resonanzhohlraum ein Flüssigkristallmaterial (16) umfasst und eine auf dem Substrat oder dem Superstrat ausgebildete Elektrode (8a-h) aufweist, um jedes Filter individuell abstimmen zu können.

**Revendications**

**1.** Filtre optique accordable comprenant des première et deuxième fibres optiques (1, 2) entre une couche inférieure (4) et une couche supérieure (9) entre les extrémités des fibres optiques, les fibres étant axialement alignées, et des moyens pour former une cavité résonnante optique, la cavité comprenant le volume (9) entre les extrémités des fibres optiques et un matériau à indice de réfraction variable à volonté (16) pour permettre l'accord du filtre, **caractérisé par le fait que** les moyens pour former une cavité résonnante optique comprennent un réseau de Bragg (11) dans au moins l'une des fibres optiques.

**2.** Dispositif selon la revendication 1, dans lequel les moyens pour former une cavité résonnante optique comprennent un revêtement semi-réfléchissant (10) sur l'extrémité de l'autre des fibres optiques.

**3.** Dispositif selon l'une des revendications 1 et 2, dans lequel le matériau à indice de réfraction variable à volonté est un matériau à cristaux liquides (16), le dispositif comprenant des moyens d'alignement (17) pour orienter le matériau à cristaux liquides.

**4.** Dispositif selon la revendication 3, dans lequel les moyens d'alignement (17) sont agencés de telle sorte que l'orientation du matériau à cristaux liquides (16) varie sur la longueur de la cavité entre les première et deuxième fibres optiques.

**5.** Dispositif selon l'une des revendications 3 et 4, dans lequel les moyens d'alignement comprennent une couche d'alignement (17) formée sur la couche inférieure (4) et la couche supérieure (5).

**6.** Dispositif selon l'une des revendications 3 et 4, dans lequel les moyens d'alignement comprennent un réseau en surface (17) formé sur la couche inférieure (4) et la couche supérieure (5).

**7.** Dispositif selon l'une quelconque des revendications précédentes, dans lequel les fibres optiques sont maintenues dans des rainures en V (12) formées sur la surface de la couche inférieure et de la couche supérieure.

**8.** Dispositif selon l'une quelconque des revendications précédentes, comprenant des moyens pour appliquer une tension ($V_n$, $V_x$, $V_y$) pour faire varier l'indice de réfraction du matériau de cavité, dans lequel les moyens pour appliquer une tension comprennent une électrode (7) formée sur une surface interne de la couche inférieure (4) ou de la couche supérieure (5).

9. Dispositif selon l'une quelconque des revendications précédentes, dans lequel la couche inférieure (4) est formée de silice.

10. Dispositif selon l'une quelconque des revendications précédentes, dans lequel les première et deuxième fibres optiques sont des fibres à coeur effilé, le diamètre de coeur croissant vers le volume entre les fibres.

11. Réseau de filtres optiques accordables individuellement, comprenant une pluralité de fibres optiques (1a-h, 2a-h) sur chacun de deux côtés opposés du dispositif, chaque fibre de chaque côté étant alignée avec l'une des fibres du côté opposé au moyen de rainures (12) formées dans une couche inférieure (4) et une couche supérieure, avec un volume (9) entre l'extrémité de chaque paire de fibres, et des moyens pour former une cavité résonnante optique incluant le volume (9) entre les extrémités des fibres, les moyens pour former une cavité résonnante optique comprenant un réseau de Bragg (11) dans au moins une de chaque paire de fibres, chaque cavité résonnante optique comprenant un matériau à cristaux liquides (16) et contenant une électrode (8a-h), formée sur la couche inférieure ou la couche supérieure, pour permettre un accord individuel de chaque filtre.

Figure 1

Figure 2

Figure 3.

Figure 4

Figure 5.

Figure 6.

Figure 7.

Figure 8

Figure 9

Figure 10.

DRIVE VOLTAGE IN UNITS OF THRESHOLD VOLTAGE $V_o$, $V_o = 0.9V$

Figure 11

Figure 12

Figure 13